# EUROPEAN PATENT APPLICATION

(11) **EP 1 006 705 A1**
(43) Date of publication of application: **07.06.2000**
(21) Application number: 98440282.6
(22) Date of filing: 04.12.1998
(51) Int. Cl.: H04M 3/48, H04M 3/42, H04M 1/72, H04Q 7/22

(54) **Private telecommunications switching system and method of establishing a connection**

(71) Applicant: ALCATEL, 75008 Paris (FR)
(72) Inventor: Moisset, Eric, 67230 Benfeld (FR)
(74) Representative: Rausch, Gabriele, Dr.

(57) **Abstract**

A private telecommunications switching system (TK) has at least one first interface (IN) for an exchange line (AMT) to a public switched telephone network (FSN) and a number of second interfaces (TNS1 -TNS4) to which terminals (TN1-TN4) are connectable. It further includes means for establishing a connection to one of the terminals in response to a call from the public switched telephone network (FSN) and for establishing a connection to the public switched telephone network (FSN) in response to a connection request from one of the terminals. Each of the terminals (TN1-TN4) has a respective one of the second interfaces (TNS1-TNS4) associated with it. According to the invention, the private telecommunications switching system (TK) includes signaling means for sending a signaling message to a terminal whose connection request could not be complied with because of an existing connection of another terminal, this signaling message being sent via the interface associated with the requesting terminal after the existing connection was released.

## Description

This invention relates to a private telecommunications switching system as set forth in the preamble of claim 1 and to a method of establishing a connection from a terminal to a public switched telephone network through a private telecommunications switching system as set forth in claim 8.

Private telecommunications switching systems serve to switch connections from connected terminals to a public switched telephone network, connections between the terminals, and connections to the terminals in response to calls received from the public switched telephone network. The terminals may be wireline digital terminals, analog terminals, or cordless telephones. A private telecommunications switching system may have one or more lines to the public switched telephone network. As a rule, however, the number of terminals connected to the system is greater than the number of lines to the telephone network, so that not all terminals can get a connection to the telephone network at the same time. Private telecommunications switching systems are frequently also referred to as private automatic branch exchanges (PABXs).

European Patent Specification 0 243 900 B1 discloses a private telecommunications switching system, referred to as a base station, to which M cordless telephones can be connected. It has N lines to a public switched telephone network, with N being less than M. The base station can switch connections from the cordless telephones to the public switched telephone network via the N lines and additional connections between the cordless telephones. The base station and the cordless telephones communicate with each other via a common dedicated signaling channel, and the base station notifies the cordless telephones of the busy/idle condition of all N lines via this signaling channel. Each of the cordless telephones has a display which indicates the busy/idle condition of each of the N lines, so that a user will know whether one of the N lines is currently available, i.e. whether he or she can telephone via the telephone network or not. Disadvantages are that a common dedicated signaling channel is needed, that the radiotelephones must constantly be ready to receive on the dedicated signaling channel, and that all radiotelephones require complex and costly electronics for the change from the signaling channel to one of the communication channels.

It is an object of the invention to provide a private telecommunications switching system with a user-friendly service feature for the case where all lines to the public switched telephone network are busy and a request for a connection from a terminal to a public switched telephone network connected to the private telecommunications switching system cannot be executed immediately. In particular, a private telecommunications switching system is to be provided which does not need a common dedicated signaling channel. Another object of the invention is to provide a method of establishing a connection from a terminal to a public switched telephone network through a private telecommunications switching system which provides a user-friendly service for the case where all lines to the public switched telephone network are busy and a connection request cannot be executed immediately.

These objects are attained by the features of the claims 1 and 8, respectively. Further advantageous features of the invention are defined in the dependent claims.

The invention will become more apparent from the following description of several embodiments when taken in conjunction with the accompanying drawing, in which:
- Fig. 1: shows a private telecommunications switching system with terminals connected thereto; and
- Fig. 2: is a flowchart showing the steps of the method in accordance with the invention.

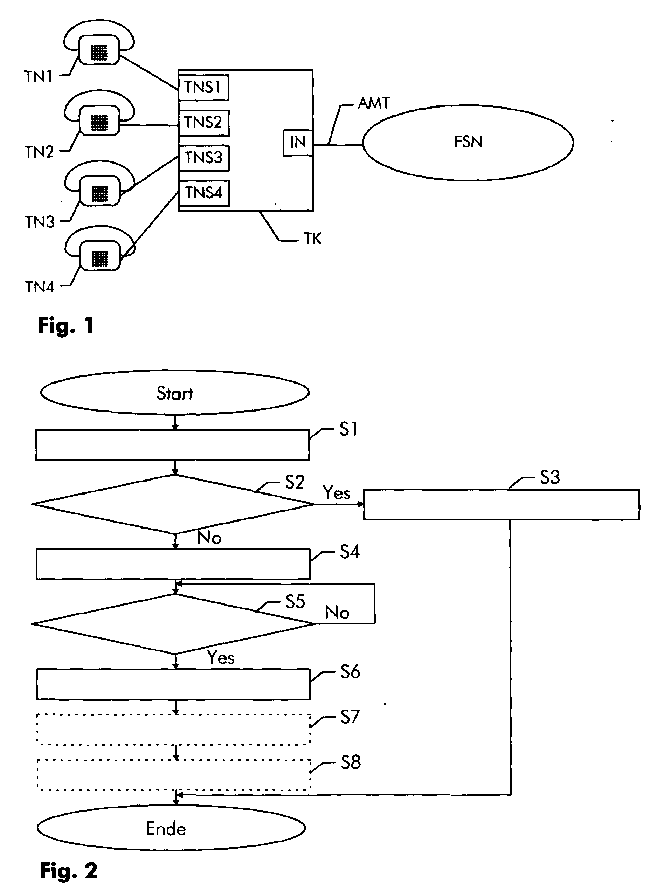

The private telecommunications switching system TK shown in Fig. 1 has a first interface IN, to which a line AMT - hereinafter referred to as an exchange line - to a public switched telephone network FSN is connected. The private telecommunication switching systems TK further comprises four second interfaces TNS1 -TNS4, which each have one of four terminals TN1-TN4 connected to them. Accordingly, each of the terminals TN1 -TN4 has one of the interfaces TNS1 -TNS4 permanently associated with it. The private telecommunications switching system TK serves to switch connections from the terminals TN1 -TN4 to the public switched telephone network FSN, connections between the terminals TN1 -TN4, and connections to the terminals TN1 -TN4 in response to incoming calls from the public switched telephone network FSN.

Since the private telecommunications switching system TK has fewer exchange lines AMT, namely one, than terminals TN1-TN4 connected to it, namely four, not all of the terminals can get a connection to the public switched telephone network FSN simultaneously. Thus, a situation may occur in which the exchange line AMT is engaged by one of the terminals while another one of the terminals is requesting an exchange line. Consequently, this request cannot be executed.

A basic idea of the invention is that on the occurrence of the situation described, the private telecommunications switching system, after release of the existing connection, sends to the other terminal, whose connection request could not be executed immediately, a signaling message via its associated interface. The signaling message indicates that the exchange line is idle again, so that the connection request can now be executed.

To perform the function described, the private telecommunications switching system includes means for detecting and storing a connection request that cannot be executed immediately. The private telecommunications switching system further includes signaling means for sending the signaling message to the terminal whose connection request could not be executed immediately.

In the embodiment being described, the private telcommunications switching system is controlled by a processor which executes the functions described by means of control software. The processor is connected to a memory in which the information that a connection request could not be executed and data identifying the terminal from which the connection request originated are stored. When the exchange line becomes free again, the processor sends the signaling message to the waiting terminal. If connection requests from two or more terminals can not be executed immediately, an order according to which the waiting terminals will be informed that a line has become free will additionally be stored in the memory.

The signaling message may be, for example, a ringing signal which indicates the idle condition of the exchange line to the user of the terminal. Alternatively, the signaling message may be a message presentable on a display of the terminal which indicates that the exchange line engaged by the existing connection is available again.

The private telecommunications switching system may be so designed that either analog wireline terminals or digital wireline terminals are connectable to it. In the case of digital wireline terminals which operate according to the recommendations for ISDN (integrated services digital network), a service channel (D channel) may be provided between the terminal and the private telecommunications switching system for signaling between the private telecommunications switching system and the terminal. Instead of a wired interface between the private telecommunications switching system and the terminals, a radio interface may be provided. Hybrid systems containing analog, digital, and radio terminals are also possible. The private telecommunications switching system may also have two or more exchange-line interfaces.

In a preferred embodiment of the invention, the private telecommunications switching system includes means for reserving the line that has become free for a predetermined period of time after the signaling message was sent to one of the terminals. The user whose connection request could not be executed immediately can thus be sure of being granted an exchange line for the desired connection during that predetermined period of time.

In another preferred embodiment of the invention, the private telecommunications switching system includes means for automatically establishing a connection corresponding to a connection request not complied with, i.e., for completing the path, after the existing connection was released. This service feature of the private telecommunications switching system is an improvement of the well-known feature "camp-on". "Camp-on" is the function which, if a connection request can not be executed because the desired remote terminal is busy, automatically establishes the desired connection when the remote terminal becomes free. Applied to the private telecommunications switching system according to the invention, the preferred embodiment consists in the fact that a connection corresponding to a connection request which cannot be executed immediately because the exchange line is busy is automatically established by the private telecommunications switching system after the exchange line has become free again. The advantage resulting for the user is that, if a connection request cannot be complied with immediately, the user need not take any further steps - such as redialing - to get the desired connection switched by the private telecommunications switching system after the end of the busy state of the exchange line.

A first embodiment of the method according to the invention for establishing a connection from terminals to a public switched telephone network through a private telecommunications switching system is shown as a flowchart in Fig. 2. The method comprises the following steps:
- Step S1:: A terminal sends a connection request to the private telecommunications switching system to which it is connected.
- Step S2:: A test is made in the private telecommunications switching system to determine whether an exchange line is available for the establishment of the connection corresponding to the connection request.
- Step S3:: If an exchange line is available, the desired connection will be established, and the process is complete.
- Step S4:: If no exchange line is available, the connection request and data identifying the terminal from which the connection request originated will be stored in a memory of the private telecommunications switching system. The requesting terminal will receive a busy signal as usual. The user will therefore know that no exchange line is available, and will release the connection to the private telecommunications switching system.
- Step S5:: A test to determine whether an exchange line is free is made in the private telecommunications switching system until that is the case. In the case of a processor-controlled private telecommunications switching system, it is also possible to indicate and determine a connection release by interrupt control instead of performing continuous testing.
- Step S6:: When an exchange line has become free, a signaling message is sent to the terminal whose connection request could not be complied with immediately. The signaling message may be, for example, in the form of a ringing signal or in the form of a message presentable on a display of the terminal. The user will then know that an exchange line is now available for the desired connection.
- Step S7:: After transmission of the signaling message, the exchange line that has become free is advantageously reserved for the user for a predetermined period of time.
- Step S8:: Advantageously, the requested connection which was not set up immediately may also be automatically completed via the released exchange line by the private telecommunications switching system.

A second embodiment of the method according to the invention comprises the following steps. The exchange line of the private telecommunications switching system is engaged by a call of a first terminal. A user at a second terminal presses the line key to make a call over the exchange line and receives busy tone, since the exchange line is busy. At the same time, the fact that a connection has been requested at the second terminal is stored in the private telecommunications switching system. As soon as the call from the first terminal is terminated, so that the exchange line is free again, a ringing signal - advantageously a specific ringing signal indicating that the exchange line has become free - and a message presentable on a display of the second terminal are sent to the second terminal. The user of the second terminal is thus informed that an exchange line has become free. The message is advantageously presented on the display of the second terminal for a predetermined period of time during which the exchange line is also reserved for the second terminal. Pressing the line key of the second terminal a second time causes the exchange line having become free to be switched through to the second terminal.

The invention is not limited to private telecommunications switching systems with only one exchange line and with wireline terminals. The private telecommunications switching system may also be a base station for a telephone system with cordless telephones, such as a system based on the DECT standard. The private telecommunications switching system may also have two or more exchange-line interfaces. The novel treatment of connection requests which cannot be executed immediately can then be used if all exchange lines are busy.

## Claims

1. A private telecommunications switching system (TK) having a first interface (IN) for a line (ANT) to a public switched telephone network (FSN), a number of second interfaces (TNS1 -TNS4) to which terminals (TN1 -TN4) are connectable, and means for establishing a connection to one of the terminals in response to a call from the public switched telephone network (FSN) and for establishing a connection to the public switched telephone network (FSN) in response to a connection request from one of the terminals,
**characterized in**
that each of the terminals (TN1 -TN4) has a respective one of the second interfaces (TNS1 -TNS4) associated with it, and that the private telecommunications switching system (TK) comprises a signaling means for sending a signaling message to a terminal whose connection request could not be complied with because of an existing connection of another terminal, said signaling message being sent via the interface associated with said terminal after the existing connection was released.

2. A private telecommunications switching system (TK) as claimed in claim 1 wherein at least part of the second interfaces are radio interfaces.

3. A private telecommunications switching system (TK) as claimed in claim 1, comprising additional first interfaces for further lines to the public switched telephone network (FSN).

4. A private telecommunications switching system (TK) as claimed in claim 1 wherein the signaling message sent by the signaling means is a ringing signal.

5. A private telecommunications switching system (TK) as claimed in claim 1 wherein the signaling message sent by the signaling means is a message presentable on a display of the terminal which indicates that the line engaged by the existing connection is available again.

6. A private telecommunications switching system (TK) as claimed in claim 1, comprising a means for reserving the released line for a predetermined period of time after the signaling message was sent to one of the terminals.

7. A private telecommunications switching system (TK) as claimed in claim 1, comprising a means for automatically establishing a connection corresponding to the connection request not complied with after the existing connection was released.

8. A method of establishing a connection from a terminal (TN1 -TN4) to a public switched telephone network (FSN) through a private telecommunications switching system (TK), comprising sending a connection request from the terminal (TN1-TN4) to the private telecommunications switching system (TK), testing in the private telecommunications switching system (TK) whether a line (AMT) to the public switched telephone network (FSN) is available, and, if all lines (ANT) to the public switched telephone network (FSN) are busy, sending a signaling message from the private telecommunications switching system (TK) to the terminal (TN1-TN4) after one of the lines (AMT) has become available.
